## Europäisches Patentamt

## European Patent Office

## Office européen des brevets

(11) Veröffentlichungsnummer: **0 212 181**
**B1**

(12) **EUROPÄISCHE PATENTSCHRIFT**

(45) Veröffentlichungstag der Patentschrift:
**04.10.89**

(21) Anmeldenummer: **86109165.0**

(22) Anmeldetag: **04.07.86**

(51) Int. Cl.⁴: **F 02 C 3/02, F 04 F 11/02**

(54) Gasturbine mit einer Druckwellenmaschine als Hochdruckverdichterteil.

(30) Priorität: **31.07.85 CH 3319/85**

(43) Veröffentlichungstag der Anmeldung:
**04.03.87 Patentblatt 87/10**

(45) Bekanntmachung des Hinweises auf die Patenterteilung:
**04.10.89 Patentblatt 89/40**

(84) Benannte Vertragsstaaten:
**CH DE FR GB LI NL SE**

(56) Entgegenhaltungen:
**CH-A-95 548**
**CH-A-342 415**
**CH-A-420 734**
**DE-C-280 083**
**GB-A-820 151**
**US-A-3 003 315**
**US-A-3 043 106**

(73) Patentinhaber: **BBC Brown Boveri AG,
Haselstrasse, CH- 5401 Baden (CH)**

(72) Erfinder: **Keller, Jakob, Dr., Plattenstrasse 8, CH-
5605 Dottikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die vorliegende Erfindung betrifft eine Gasturbine mit einer Druckwellenmaschine als Hochdruckverdichterteil nach dem Oberbegriff des Patentanspruchs 1.

Es wurde, u. a. in der CH-Patentschrift 229 280 nachgewiesen, dass sich Druckwellenmaschinen, insbesondere in der Auslegung als Drucktauscher, vorteilhaft als Hochdruckverdichterteil von stationären Gasturbinenanlagen eignen. Eine Druckwellenmaschine wird sowohl von heissem Abgas als auch von verhältnismässig kalter Luft durchströmt, so dass sich für die Wärmebelastung der gasbeaufschlagten Teile eine Gleichgewichtstemperatur einstellt, die wesentlich niedriger ist als die höchste Abgastemperatur. Deshalb kann mindestens ein Teil des Brennstoffes bei wesentlich höherer Temperatur verbrannt werden als in einer herkömmlichen Gasturbinenanlage. Dies ist der unmittelbare Grund dafür, dass Druckwellenmaschinen als Hochdruckverdichter bzw. anstelle von Hochdruckturbinen von Gasturbinenanlagen deren Wirkungsgrad verbessern können. Die hauptsächlichen Nachteile der bisher bekanntgewordenen Druckwellenmaschinen, die ihrer praktischen Einführung bisher im Wege standen, bestehen im folgenden:

- Die Wände im Bereich der Hochtemperaturkammer werden sehr heiss;

- die Zeit zwischen der Bildung der heissesten Abgase und ihrer Abkühlung durch Expansionswellen oder durch Mischung mit kühleren Gasen ist so lang, dass eine Stickoxidbildung nicht auszuschliessen ist;

- bei idealer Auslegung der Druckwellenmaschine als Druckaustauscher, wobei keine Wechselwirkung zwischen Druckwellen und Medientrennfronten auftritt, sind die Machzahlen der Strömung derart hoch, dass grosse Strömungsverluste auftreten können;

- und schliesslich sind die Mediengrenzen zwischen Abgas und Luft oft sehr lang, wodurch Mischzonen entstehen, die hauptsächlich durch die Zentripetalkräfte im Rotor und durch Wirbelbildung im Bereich von Abgaseintrittsöffnungen sehr breit werden können.

Aus der US-A-3 003 315 ist eine Anwendung einer Druckwellenmaschine zur Erzeugung eines Treibgases in Form einer Mischung aus einem Verbrennungsgas und Hochdruckdampf zum Antrieb einer Dampfturbine bekannt. In den Zellen eines Druckwellenläufers wird dabei ein zündfähiges Gemisch aus Luft, eingespritztem Kraftstoff und Verbrennungsgasen durch Druckwellen zur Selbstentzündung gebracht und durch Wassereinspritzung besagtes Treibgas erzeugt. Die erwähnten Verbrennungsgase inkl. eines geringen Dampfanteils stammen aus Zellen, in denen die Verbrennung bereits stattgefunden hat und die über Rückführleitungen und Düsen kurzzeitig mit Zellen in Verbindung stehen, in die darauffolgend Kraftstoff eingespritzt und durch die Druckwellen zur Selbstentzündung gebracht wird. Eine Selbstzündung-Detonation findet in den Zellen statt, aber in einem anderen Zyklus als nach der vorliegenden Erfindung. Es handelt sich dabei also um eine von der vorliegenden völlig verschiedene Anwendung des Druckwellenprinzips.

Die vorliegende, in den Ansprüchen 1 und 2 definierte Erfindung entstand aus der Aufgabe, die eingangs erwähnten Mängel der bekannten Druckwellenmaschinen, die für eine Verwendung als Hochdruckverdichterteil von Gasturbinenanlagen vorgeschlagen worden sind, zu beheben.

Die Erfindung wird im folgenden anhand eines in der Zeichnung dargestellten Ausführungsbeispiels näher beschrieben. In der Zeichnung stellen dar:

Fig. 1      schematisch den Verlauf des Druckwellenprozesses der erfindungsgemässen Druckwellenmaschine,

Fig. 2      die erfindungsgemässe Druckwellenmaschine in Verbindung mit einer Gasturbinenanlage, und die

Fig. 3      den Druckwellenprozess im Geschwindigkeits/Druck-Diagramm.

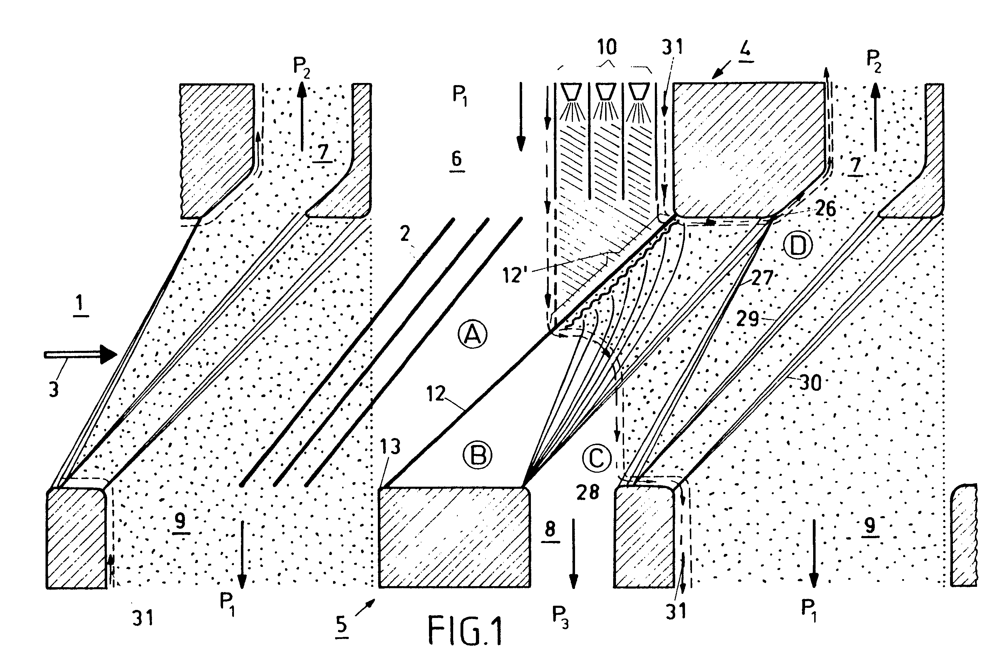

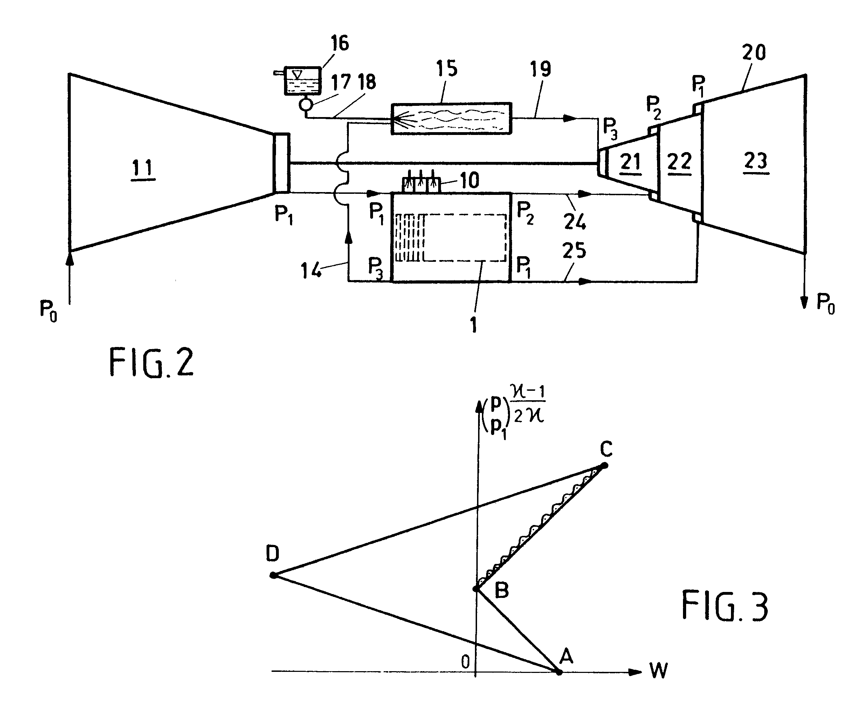

Die Fig. 1 zeigt in einer Abwicklung schematisch die Teile der Detonationsdruckwellenmaschine, soweit sie zur Erklärung des Druckwellenprozesses gebraucht werden. Von einem Rotor 1 sind nur drei Zellenwände 2 dargestellt, die vorteilhaft schräg zur Umfangsrichtung verlaufen, aber prinzipiell ebenso rechtwinklig dazu angeordnet sein könnten. Der Rotor 1 läuft mit sehr kleinem Spiel in einem nicht dargestellten Gehäuse, das an den beiden Rotorstirnseiten durch zwei Gehäuse 4, 5 mit Luft- und Gaskanälen abgeschlossen ist. Das linke Gehäuse 4, gesehen in Richtung des Drehrichtungspfeiles 3, enthält je Zyklus, worunter die Gesamtheit der für einen Druckwellenprozess erforderlichen Kanäle zu verstehen ist, einen Niederdruckluftkanal 6 für die Zufuhr von Luft aus einem Verdichter der in Fig. 2 dargestellten Gasturbinenanlage, deren Zusammenwirken mit der Druckwellenmaschine unten noch ausführlich besprochen wird, sowie einen Mitteldruckgaskanal 7. Das rechte Gehäuse 5 weist einen Hochdruckluftkanal 8 und einen Niederdruckgaskanal 9 auf, deren Funktion und Zusammenwirken mit der Gasturbinenanlage ebenfalls im Zusammenhang mit Fig. 2 beschrieben wird.

Im Gehäuse 4 erhält der in der Rotorumfangsrichtung relativ breite Niederdruckluftkanal 6 Luft vom Druck $p_1$ aus einem Verdichter 11 der in Fig. 2 dargestellten Gasturbinenanlage. Wenn hier von Niederdruckluft gesprochen wird, so ist dies nicht absolut zu verstehen, sondern niedrig nur im Vergleich zu den übrigen Druckniveaus der Anlage. Der hier zu beschreibende Druckwellenprozess wäre beispielsweise zu realisieren mit einem Enddruck $p_1 = 16$ bar der im Verdichter 11 komprimierten Luft und einer Temperatur von 400 °C. Diese Luft tritt also durch den vorderen Teil des Niederdruckluftkanals 6 in das Zellenrad 1 ein. Im hinteren Teil des Kanals 6, gesehen in der Rotordrehrichtung, ist eine Reihe 10 von Brennstoffdüsen angeordnet, im gezeichneten Beispiel deren drei. Durch diese Brennstoffdüsen wird der Luft fein zerstäubtes Brennöl beigemischt. Zur Zerstäubung kann aus dem Hochdruckluftkanal 8 Luft abgezweigt werden, wobei es sich aber nur um einen sehr kleinen, für den Gesamtprozess nicht ins Gewicht fallenden Anteil des gesamten Hochdruckluftstromes handelt. Falls in die Luft im Bereich A, die unter einem Druck von $p_1 = 16$ bar steht und eine Temperatur von 400 °C aufweist, ein stöchiometrisches Luft/Dieselöl-Gemisch eingespritzt wird, so zündet dieses nach ca. 3 Millisekunden spontan. Dies entspricht dem Selbstentzündungsvorgang in einem Dieselmotor. Im Bereich A entsteht eine Primärkompressionswelle 12, die von der Schliesskante 13 des Kanals 9 im brennkammerseitigen Gehäuse 5 ausgeht und die Luft und das Luft/Dieselöl-Gemisch abbremst. Die Brennstoffdüsen sind in bezug auf die Primärkompressionswelle 12 so angeordnet, dass die Zeitdauer zwischen Einspritzbeginn der einzelnen Düsen und Auftreffen der zerstäubten Brennstoffstrahlen auf die Primärkompressionswelle 12 etwas kleiner ist als die erwähnte, zur Selbstentzündung erforderliche Zeitdauer von 3 Millisekunden. Dabei wird das Gemisch durch die Primärkompression sofort gezündet und dadurch im Bereich 12' eine Detonationswelle ausgelöst. Die Luft im Bereich B, die beim Abbremsen durch die Primärkompression bereits vorverdichtet wurde, wird vom Detonationsvorgang auf einen Druck $p_3$ verdichtet und durch den Hochdruckluftkanal 8 und eine Hochdruckluftleitung 14 in eine regulierbare Brennkammer 15 gedrückt, die den Brennstoff aus einem Brennstoffbehälter 16 durch eine Brennstoffpumpe 17 und eine Brennstoffleitung 18 erhält, siehe Fig. 2. Die in der Brennkammer 15 erzeugten Treibgase gelangen durch eine Treibgasleitung 19 in den Hochdruckteil 21 einer Gasturbine 20, die ausserdem einen Mitteldruckteil 22 und einen Niederdruckteil 23 aufweist.

Die durch die Verbrennung entstandenen Treibgase im Bereich D treten durch die Kanäle 7 und 9 aus und gelangen über eine Mitteldruckgasleitung 24 bzw. eine Niederdruckgasleitung 25 in den Mitteldruckteil 22 bzw. Hochdruckteil 23 der Turbine 20. Dies entspricht einer Zwischenüberhitzung der am Ende des Hochdruckteils 21 und des Mitteldruckteils 22 teilentspannten Treibgase. Sie werden dort jeweils auf den Anfangsdruck des folgenden Turbinenteils bzw. im Niederdruckteil auf den Gegendruck $p_0$ = Atmosphärendruck entspannt. Dadurch, dass der durch den Kanal 7 austretende Teil der Treibgase im Bereich D auf den Druck $p_2$ vor dem Mitteldruckteil 22 der Turbine entspannt wird, verhindert man, dass der durch den Kanal 9 austretende Anteil der Treibgase, der auf $p_1$ entspannt wird, zu hohe Geschwindigkeiten annimmt. Der zweimalige Richtungswechsel der Geschwindigkeit, der aus dem Geschwindigkeits/Druck-Diagramm des Druckwellenprozesses nach Fig. 3 hervorgeht, gewährleistet, dass die im Treibgas laufenden Expansionswellen nicht zu hohe Strömungsgeschwindigkeiten und trotzdem ein genügend starkes Druckgefälle erzeugen. Von der Öffnungskante 26 des Mitteldruckgaskanals 7 im Gehäuse 4 läuft eine Expansionswelle 27 zur Schliesskante 28 des Hochdruckluftkanals 8 im Gehäuse 5 und expandiert das Treibgas vom Druck $p_3$ auf $p_2$. Ein Teil des Treibgases im Bereich 8 durchläuft ein Expansionswellenpaar 29, 30 und expandiert damit auf den Druck $p_1$. Strömungspfeile 31 im wandnahen Bereich der Kanäle 6, 7, 8 und 9 deuten Kühlluftströme an, welche die den heissen Treibgasen ausgesetzten Gehäuseteile kühlen. Deren Überhitzung wird auch vermieden, indem die Brennstoffdüsen so weit von den Gehäuseteilen entfernt angeordnet werden, dass sie nicht von den Brennstoffstrahlen beaufschlagt werden, beispielsweise die Partie im Bereich der Schliesskante des Niederdruckluftkanals 6.

Die regulierbare Brennkammer ist vorteilhaft so ausgelegt, dass die in ihr erzeugten Treibgase bei maximaler Last gerade die zulässige Grenztemperatur der Beschaufelung am Eintritt des Hochdruckteiles 21 der Turbine erreichen. Nach dem Hochdruckteil 21 wird, wie schon oben erwähnt, den teilentspannten und entsprechend abgekühlten Treibgasen das heissere Treibgas vom Druck $p_2$ aus dem Kanal 7 zugemischt, und zwar derart, dass das aufgeheizte Treibgasgemisch wiederum gerade die Grenztemperatur vor der ersten Stufe des Mitteldruckteils 22 erreicht. Nach der Expansion von $p_2$ auf $p_1$ im Mitteldruckteil wird dem Treibgas noch der zweite Treibgasanteil vom Druck $p_1$ aus dem Kanal 9 zugemischt, wobei das Gemisch wiederum auf die Grenztemperatur aufgeheizt wird. Man erhält auf diese Weise für die Turbine eine grobe Annäherung an die isotherme Expansion des Carnotschen Kreisprozesses.

Die Spülluftmenge, die dem Bereich B zugeführt wird, ist abhängig von der Lage und Anzahl der Brennstoffdüsen. Durch entsprechende Anordnung der Düsen lässt sich auch erreichen, dass aus dem Bereich B nur Luft in den Kanal 7 ausgeblasen wird. Dies bedeutet, dass der betreffende Gehäuseteil nur von Luft beaufschlagt wäre. Bei Verwendung eines Rotors 1 mit Diagonalzellen 2 könnte durch Energieteilung in den Zellen eine verlustfreie Vereinigung der zwei Luftteilströme von unterschiedlichem Druck erreicht werden, indem die bei D in Drehrichtung des Rotors austretende Luft auf Kosten der bei C in der Gegendrehrichtung austretenden Luft einen Überschuß an dynamischem Druck erhält. Die Druckwellenmaschine ist dann so auszulegen, dass die Stärke der Expansionswelle annähernd dem erwähnten dynamischen Druckunterschied entspricht. In diesem Fall entfällt die Mitteldruckturbine. Ein grosser Vorteil dieses Spezialfalles besteht darin, dass alle Gehäuseteile, auch der Wandteil zwischen der Schliesskante des Kanals 7 und der Öffnungskante des Kanals 6, von Kühlluftfilmen umspült werden können. Auch wenn man von diesem Extremfall absieht, ergibt die Möglichkeit, durch Änderung der Spülluftmenge die Temperatur der Treibgasmenge für die Mitteldruckturbine zu beeinflussen, eine gute Anpassungsfähigkeit der Druckwellenmaschine an die Betriebseigenschaften der Turbine.

Die Hauptvorteile dieser Detonationsdruckwellenmaschine gegenüber herkömmlichen Druckwellenmaschinen bestehen im folgenden: Es kann vermieden werden, dass die heissesten Gase, die im Detonationsbereich auftreten, mit Gehäuseteilen in Berührung kommen; die Trennfront zwischen Treibgas und Luft entsteht erst im Rotor und ist sehr kurz; es erreicht nur die Luftsäule im Bereich C hohe Machzahlen, und dies erst unmittelbar vor dem Eintritt in den Hochdruckluftkanal 8; da die Zeit zwischen der Detonation des Luft/Brennöl-Gemisches und der Abkühlung der Treibgase durch Expansionswellen sehr kurz ist, und zwar ca. 1 Millisekunde, können kaum Stickoxide entstehen; wegen der geringen Zahl von Gehäuseteilen ist die Leistungsdichte sehr hoch und der Leckageverlust klein; und schliesslich ist zu erwarten, dass der Wirkungsgrad der Druckwellenmaschine und der Gasturbinenanlage insgesamt wegen der bei sehr hohem Druck und hoher Temperatur stattfindenden Verbrennung sehr hoch sein wird. Die Gesamtheit der Kanäle 7, 8 und 9 wird man praktisch mit je einem Aufnehmer verbinden, die ihrerseits jeweils über die Hochdruckluftleitung 14, die Mitteldruckgasleitung 24 bzw. die Niederdruckgasleitung 25 mit dem Brenner 25, dem Mitteldruckteil 22 bzw. dem Niederdruckteil 23 der Turbine 20 in Verbindung stehen. Als Brennstoffe kommen neben flüssigen auch gasförmige in Frage, wobei die Anordnung der Düsen 10 im Niederdruckluftkanal 6, wie oben beschrieben, entsprechend dem Selbstentzündungsverhalten des betreffenden Gases einzuhalten ist.

Zur künstlichen Zündung käme auch eine Treibgasrückführung in Frage, wobei ein kleiner Treibgasstrom, in Drehrichtung gesehen, direkt vor den Brennstoffkanälen zugeführt werden müsste.

**Patentansprüche**

1. Gasturbinenanlage mit einer Druckwellenmaschine als Hochdruckverdichter, die einem Niederdruckverdichter (11) nachgeschaltet ist, mit einer Gasturbine (20), die mit dem Niederdruckverdichter (11) gekuppelt ist und einen Hochdruckteil (21), einen Mitteldruckteil (22) und einen Niederdruckteil (23) aufweist, ferner mit einer regulierbaren Brennkammer (15), deren Brenner mit von der Druckwellenmaschine gelieferter Hochdruckluft und einem Brennstoff gespeist werden und deren in der Brennkammer (15) erzeugten Treibgase durch eine Treibgasleitung (19) dem Hochdruckteil (21) der Turbine (20) zugeführt werden und ihre drei genannten Teile (21, 22, 23) durchströmen, und wobei die Hauptteile der Druckwellenmaschine ein Zellenrotor (1) mit Rotorzellen (2), ein dessen Umfang umschliessendes Rotorgehäuse, ein Gehäuse (4) mit mindestens einem Niederdruckluftkanal (6), der mit dem Niederdruckverdichter (11) in Verbindung steht, und ein Gehäuse (5) mit mindestens einem Hochdruckluftkanal (8), der mit der Brennkammer (15) durch eine Hochdruckluftleitung (14) verbunden ist, bilden, welche Gehäuse (4, 5) die Stirnseiten des erwähnten Rotorgehäuses abschliessen, dadurch gekennzeichnet, dass im Gehäuse (5), das die Hochdruckluftkanäle (8) aufweist, nach diesen, in der Rotordrehrichtung (3) gesehen, je ein Niederdruckgaskanal (9) vorhanden ist, der über eine Niederdruckgasleitung (25) mit dem Eintrittsraum des Niederdruckteiles (23) der Gasturbine (20) verbunden ist, dass im hinteren Bereich der Niederdruckluftkanäle (6) des Gehäuses (4), gesehen in Rotordrehrichtung (3), mindestens eine Brennstoffdüse (10) vorhanden ist, die so angeordnet ist, dass die Zeitdauer für die Selbstzündung der Brennstoffstrahlen in der Niederdruckluft grösser ist als die Zeitdauer vom Austritt der Brennstoffstrahlen aus den Düsen (10) bis zu ihrem Auftreffen auf eine von der Schliesskante (13) des Niederdruckgaskanals (9) ausgehende Kompressionswelle (12) in den jeweils im Bereich der Brennstoffdüsen (10) befindlichen Rotorzellen (2) und dass im Gehäuse (4), das die Niederdruckluftkanäle (6) enthält, nach diesen, in der Rotordrehrichtung (3) gesehen, je ein Mitteldruckgaskanal (7) vorhanden ist, der über eine Mitteldruckgasleitung (24) mit dem Eintrittsraum des Mitteldruckteiles (22) der Gasturbine (20) verbunden ist.

2. Gasturbinenanlage mit einer Druckwellenmaschine als Hochdruckverdichter, die einem Niederdruckverdichter (11) nachgeschaltet ist, mit einer Gasturbine, die mit dem Niederdruckverdichter (11) gekuppelt ist und einen Hochdruckteil und einen Niederdruckteil aufweist, ferner mit einer regulierbaren Brennkammer (15), deren Brenner mit von der Druckwellenmaschine gelieferter Hochdruckluft und einem Brennstoff gespeist werden und deren in der Brennkammer (15) erzeugten Treibgase durch eine Treibgasleitung dem Hochdruckteil der Turbine zugeführt werden und ihre zwei genannten Turbinenteile durchströmen, und wobei die Hauptteile der Druckwellenmaschine ein Zellenrotor (1) mit Rotorzellen (2), ein dessen Umfang umschliessendes Rotorgehäuse, ein Gehäuse (4) mit mindestens einem Niederdruckluftkanal (6), der mit dem Niederdruckverdichter (11) in Verbindung steht, sowie mit mindestens einem Hochdruckluftkanal (7) und ein Gehäuse (5) mit mindestens einem Hochdruckluftkanal (8), der gemeinsam mit dem Hochdruckluftkanal (7) mit der Brennkammer (15) durch eine Hochdruckluftleitung (14) verbunden ist, bilden, welche Gehäuse (4, 5) die Stirnseiten des erwähnten Rotorgehäuses abschliessen, dadurch gekennzeichnet, dass im Gehäuse (5), das die Hochdruckluftkanäle (8) aufweit, nach diesen, in der Rotordrehrichtung (3) gesehen, je ein Niederdruckgaskanal (9) vorhanden ist, dass in einem mittleren Bereich des Niederdruckluftkanals (6) Brennstoffdüsen (10) so angeordnet sind, dass die Zeitdauer für die Selbstzündung der Brennstoffstrahlen in der Niederdruckluft grösser ist als die Zeitdauer vom Austritt der Brennstoffstrahlen aus den Düsen (10) bis zu ihrem Auftreffen auf eine von der Schliesskante (13) des Niederdruckgaskanals (9) ausgehende Kompressionswelle (12) in den jeweils im Bereich der Brennstoffdüsen (10) befindlichen Rotorzellen (2), dass die gegenseitige Lage der Kanäle (7; 8) in den Gehäusen (4 bzw. 5) so gewählt ist, dass aus dem hochdruckseitigen Gebiet (B) des Rotorraumes zwischen dem Niederdruckluftkanal (6) und dem Hochdruckluftkanal (8) ausschliesslich Luft in den Kanal (7) des die Düsen (10) enthaltenden Gehäuses (4) gefördert wird, dass dieser Kanal (7) ebenso wie der Hochdruckluftkanal (8) gemeinsam über eine Hochdruckluftleitung mit der Brennkammer (15) für den Hochdruckteil der Gasturbine verbunden ist, und dass der das Treibgas aufnehmende Niederdruckgaskanal (9) über eine Niederdruckgasleitung mit dem Niederdruckteil der Gasturbine in Verbindung steht.

**Claims**

1. Gas turbine installation with a pressure wave machine as the high pressure compressor, which pressure wave machine is connected downstream of a low pressure compressor (11), the gas turbine installation having a gas turbine (20), which is coupled to the low pressure compressor (11), and which has a high pressure part (21), a medium pressure part (22) and a low pressure part (23), also having a controllable combustion chamber (15), whose burners are supplied with the high pressure air delivered by the pressure wave machine and with a fuel and whose driving gases produced in the combustion chamber (15) are supplied through a driving gas duct (19) to the high pressure part (21) of the turbine (20) and pass through the three parts mentioned (21, 22, 23), and in which the main parts of the pressure wave machine form a cell rotor (1) with rotor cells (2), a rotor casing surrounding the periphery of this rotor, a casing (4) with at least one low pressure air port (6), which is connected to the low pressure compressor (11), and a casing (5) with a least one high pressure air port (8), which is connected to the combustion chamber (15) via a high pressure air duct (14), which casings (4, 5) close the ends of the rotor casing mentioned, characterized in that one low pressure gas port (9) is present after each of the high pressure air ports (8), seen in the direction of rotation of the rotor (3), in the casing (5) containing the high pressure air ports (8), which low pressure gas port (9) is connected via a low pressure gas duct (25) to the inlet space of the low pressure part (23) of the gas turbine (20), that at least one fuel nozzle (10) is present in the rear region of the low pressure air port (6) of the casing (4), seen in the rotor rotational direction (3), which fuel nozzle is so arranged that the elapsed time for the self-ignition of the fuel jets in the low pressure air is greater than the elapsed time between the fuel jets emerging from the nozzles (10) and their impingement on a compression wave (12) in the rotor cells (2) then located in the region of the fuel nozzles (10), the compression wave starting from the closing edge (13) of the low pressure gas port (9), and that one medium pressure gas port (7) is present in the casing (4) after each of the low pressure air ports (6) which the casing contains, seen in the direction of rotation of the rotor (3), which medium pressure gas port (7) is connected, via a medium pressure duct (24) to the inlet space of the medium pressure part (22) of the gas turbine (20).

2. Gas turbine installation with a pressure wave machine as the high-pressure compressor, which pressure wave machine is connected downstream to a low pressure compressor (11), the gas turbine installation having a gas turbine, which is coupled to the low pressure compressor (11), and which has a high pressure part and a low pressure part, also having a controllable combustion chamber (15), whose burners are supplied with the high pressure air delivered by the pressure wave machine and with a fuel and whose driving gases produced in the combustion chamber (15) are supplied through a driving gas duct to the high pressure part of the turbine and pass through its two said turbine parts, and in which the main parts of the pressure wave machine form a cell rotor (1) with rotor cells (2), a rotor casing surrounding the periphery of this rotor, a casing (4) with at least one low pressure air port (6), which is connected to the low pressure compressor (11), as well as with at least one high pressure air port (7) and a casing (5) with at least one high pressure air port (8), which is connected jointly with the high pressure air port to the combustion chamber (15) via a high pressure air duct (14), which casings (4, 5) close the ends of the rotor casing mentioned, characterized in that one low pressure gas port (9) is present after each of the high pressure air ports (8), seen in the direction of rotation of the rotor (3), in the casing (5) containing the high pressure air ports (8), that in a middle region of the rotor pressure air port (6) fuel nozzles (10) are so arranged that the elapsed time for the self-ignition of the fuel jets in the low pressure air is greater than the elapsed time between the fuel jets emerging from the nozzles (10) and their impingement on a compression wave (12) in the rotor cells (2) then located in the region of the fuel nozzles (10), the compression wave starting from the closing edge (13) of the low pressure gas port (9), that the relative positions of the ports (7; 8) in the casings (4 or 5) are so selected that only air is supplied from the high pressure side region (B) of the rotor space between the low pressure air port (6) and the high pressure air port (8) into the port (7) of the casing (4) containing the nozzles (10), that this port (7) is similarly connected, like the high pressure air port (8), jointly via a high pressure air duct to the combustion chamber (15) for the high pressure part of the gas turbine, and that the low pressure gas port (9) receiving the driving gas is connected via a low pressure gas duct to the low pressure part of the gas turbine.

**Revendications**

1. Installation de turbine à gaz utilisant comme compresseur haute pression une machine à ondes de pression, qui est disposée à la suite d'un compresseur basse pression (11), avec une turbine à gaz (20) qui est couplée au compresseur basse pression (11) et qui comprend une partie haute pression (21), une partie moyenne pression (22) et une partie basse pression (23), avec en outre une chambre de combustion réglable (15) dont les brûleurs sont alimentés en air haute pression fourni par la machine à ondes de pression et en combustible et dont les gaz propulseurs produits dans la chambre de combustion (15) sont conduits par une conduite de gaz propulseurs (19) à la partie haute pression (21) de la turbine (20) et circulent à travers les trois parties (21, 22, 23) de celle-ci, et dans laquelle les parties principales de la machine ondes de pression forment un rotor à cellules (1) avec des cellules (2), un carter de rotor entourant l'enveloppe de ce rotor, un corps (4) avec au moins un canal d'air basse pression (6) qui est en communication avec le compresseur basse pression (11), et un corps (5) avec au moins un canal d'air haute pression (8) qui est en communication avec la chambre de combustion (15) par une conduite d'air haute pression (14), lesquels corps (4, 5) ferment les faces d'extrémité dudit carter de rotor, caractérisée en ce que dans le corps (5), qui présente les canaux d'air haute pression (8), il est prévu après chacun de ceux-ci, vu dans le sens de rotation (3) du rotor, un canal de gaz basse pression (9) qui est relié par une conduite de gaz basse pression (25) à la chambre d'entrée de la partie basse pression (23) de la turbine gaz (20), en ce que dans la région arrière des canaux d'air basse pression (6) du corps (4), vu dans le sens de rotation (3) du rotor, il est prévu au moins un injecteur de combustible (10) qui est disposé de telle sorte que la durée nécessaire à l'auto-allumage des jets de combustible dans l'air basse pression soit plus longue que la durée qui s'écoule depuis la sortie des jets de combustible hors des injecteurs (10) jusqu'à leur impact sur une onde de compression (12) partant de l'arête de fermeture (13) du canal de gaz basse pression (9) dans les cellules (2) se trouvant chacune dans la région des injecteurs de combustible (10), et en ce que dans le corps (4), qui contient les canaux d'air basse pression (6), il est prévu, après chacun de ceux-ci, vu dans le sens de rotation (3) du rotor, un canal de gaz moyenne pression (7) qui est en communication par une conduite de gaz moyenne pression (24) avec la chambre d'entrée de la partie moyenne pression (22) de la turbine à gaz (20).

2. Installation de turbine gaz utilisant comme compresseur haute pression une machine à ondes de pression, qui est disposée après un compresseur basse pression (11), avec une turbine à gaz qui est couplée au compresseur basse pression (11) et qui comprend une partie haute pression et une partie basse pression, avec en outre une chambre de combustion réglable (15), dont les brûleurs sont alimentés en air haute pression fourni par la machine à ondes de pression et en combustible, et dont les gaz propulseurs produits dans la chambre de pression (15) sont conduits par une conduite de gaz propulseurs à la partie haute pression de la turbine et circulent à travers les deux parties de celle-ci, et dans laquelle les parties principales de la machine à ondes de pression forment un rotor à cellules (1) avec des cellules (2), un carter de rotor entourant l'enveloppe du rotor, un corps (4) avec au moins un canal d'air basse pression (6) qui est en communication avec le compresseur basse pression (11), ainsi qu'avec au moins un canal d'air haute pression (7), et un corps (5) avec au moins un canal d'air haute pression (8) qui, conjointement avec le canal d'air haute pression (7), est en communication par une conduite d'air haute pression (14) avec la chambre de combustion (15), lesquels corps (4, 5) ferment les faces d'extrémité dudit carter de rotor, caractérisée en ce que dans le corps (5), qui présente les canaux d'air haute pression (8), il est prévu, après chacun de ceux-ci, vu dans le sens de rotation (3) du rotor, un canal de gaz basse pression (9), en ce que, dans une région moyenne du canal d'air basse pression (6), des injecteurs de combustible (10) sont disposés de telle façon que la durée nécessaire à l'auto-allumage des jets de combustible dans l'air basse pression soit plus longue que la durée qui s'écoule depuis la sortie des jets de combustible hors des injecteurs (10) jusqu'à leur impact sur une onde de compression (12) partant de l'arête de fermeture (13) du canal de gaz basse pression (9) dans les cellules (2) se trouvant chaque fois dans la région des injecteurs de combustible (10), en ce que la position opposée des canaux (7; 8) dans les corps (4, respectivement 5) est choisie de telle façon que, à partir de la région de haute pression (B) de la chambre du rotor comprise entre le canal d'air basse pression (6) et le canal d'air haute pression (8), il s'écoule exclusivement de l'air dans le canal (7) du corps (4) contenant les injecteurs (10), en ce que ce canal (7) tout comme le canal d'air haute pression (8) est, par une conduite d'air haute pression, conjointement en communication avec la chambre de combustion (15) pour la partie haute pression de la turbine à gaz, et en ce que le canal de gaz basse pression (9) recevant le gaz propulseur est en communication par une conduite de gaz basse pression avec la partie basse pression de la turbine à gaz.

FIG.1

EP 0 212 181 B1

FIG.2

$$\left(\frac{P}{P_1}\right)^{\frac{\varkappa-1}{2\varkappa}}$$

FIG.3